# EUROPÄISCHE PATENTSCHRIFT

(11) **EP 2 690 421 B1**
(45) Veröffentlichungstag und Bekanntmachung des Hinweises auf die Patenterteilung: **11.12.2024**
(21) Anmeldenummer: 13177029.9
(22) Anmeldetag: 18.07.2013
(51) Int. Cl.: G01B 11/16, G01L 1/24, G01D 5/353, G01K 11/3206, G01L 3/12, G02B 6/02

(54) **Sensorfaser zur Temperatur-, Dehnungs- und/oder Torsionsdetektion in Form eines Mehrkern-Lichtwellenleiters mit einer Fiber-Bragg-Gitterstruktur**
Sensor fibre for temperature, expansion and/or torsion detection in the form of a multi-core optical fibre with a fibre Bragg grating structure
Fibre de capteur pour la détection de la température, de la dilatation et/ou de la torsion sous la forme d'un guide optique lumineux à noyaux multiples ayant une structure de réseau de Bragg à fibres

(30) Priorität: 26.07.2012 DE 102012106806
(43) Veröffentlichungstag der Anmeldung: 29.01.2014
(73) Patentinhaber: j-fiber GmbH, 07751 Jena (DE)
(72) Erfinder: Rosenkranz, Jürgen, 07754 Jena (DE); Rosenow, Ralitsa, 07749 Jena (DE); Landers, Armin, 99425 Weimar (DE); Rößner, Katrin, 07745 Jena (DE); Hanf, Robert, 07607 Eisenberg (DE); Brehm, Lothar, 07743 Jena (DE); Bernauer, Otto, 47447 Moers (DE)
(74) Vertreter: Meissner Bolte Partnerschaft mbB

(56) Entgegenhaltungen:
- WO-A1-03/005080
- WO-A1-2007/143369
- WO-A1-2008/080174
- DE-A1- 10 237 361
- JP-A- 2011 180 133
- US-A1- 2011 052 129
- US-A1- 2012 114 292
- US-B1- 7 317 849

## Beschreibung

Die Erfindung betrifft eine Sensorfaser zur Temperatur-, Dehnungs- und/oder Torsionsdetektion in Form eines Mehrkern-Lichtwellenleiters mit einer Fiber-Bragg-Gitterstruktur nach dem Oberbegriff des Anspruchs 1.

Derartige Sensorfasern werden verwendet, um Materialien und Prozesse zu überwachen. Durch das Einschreiben von Fiber-Bragg-Gittern (FBG) in den Faserkern wird eine Sensitivität gegenüber Längen- und/oder Temperaturänderungen erreicht. Durch eine Kombination mehrerer derartiger FBG werden auch Materialdurchbiegungen und - spannungen bestimmbar. Zur Fehlerreduktion infolge einwirkender Umgebungsbedingungen auf die einzelnen FBG, werden mehrere dieser Gitter in einer Faser zusammengefasst, die somit mehrere derartige FBG-Faserkerne enthält.

Aus dem Stand der Technik sind mehrere Ausführungsformen solcher Mehrkernfasern bekannt. Die US 5563967 lehrt beispielsweise ein Verfahren zur Herstellung einer Sensorfaser basierend auf einem Design mit zwei FBG-Faserkernen. Mit einer derartigen Sensorfaser ist es möglich, Temperatur- und Längenänderungen simultan zu bestimmen.

Die WO 2007/143369 A1 offenbart einen optischen Fasersensor in Mehrkernausführung. Gemäß der dort enthaltenen Lehre wird ein Drucksensor in Form einer mehrkernigen optischen Faser beschrieben. Der dort offenbarte Aufbau ist dafür vorgesehen, einen äußeren Druck über die Messung einer Faserbiegung zu bestimmen. Für die Bestimmung der Biegung an der Faser gemäß werden dort beide Faserkerne ausgelesen. Gemäß der dort offenbarten Lehre muss lediglich ein relatives Verhalten beider Faserkerne bestimmbar sein, wobei daraus die Biegung bestimmt wird. Die Position der Faserkerne hingegen ist dort nicht von Bedeutung.

Die WO 03/005080 A1 offenbart ein Verfahren in Verbindung mit optischen Fasern. Gegenstand der Druckschrift ist ein Herstellungsverfahren zum Herstellen einer Faser, die Kapillaren aufweist. Diese werden gemäß der dort offenbarten Lehre mit einem Material, vorzugsweise Metall, befüllt. Die Faser soll dort ausgestaltet sein, dass über ein Anlegen eines elektrischen Feldes oder selektives Erwärmen die optischen Eigenschaften des Faserkerns modifizierbar sind.

Die US 7,317,849 B1 offenbart einen optischen Fasersensor und ein Verfahren zum Herstellen eines derartigen Sensors. Die dort vorgesehene Anordnung der FBG-Faserkerne soll zur Detektion von Biegungen innerhalb definierter Ebenen verwendet werden. Gemäß der dort offenbarten Lehre erfolgt die Zuordnung und Orientierung der Faserkerne durch eine äußere Formgebung der Sensorfaser. Diese kann dadurch definiert auf eine entsprechende Fläche aufgelegt werden.

Die US 2012/0114292 A1 offenbart mehrkernige optische Faserbänder. Bei den dort gezeigten Faserbändern sind mindestens zwei Kerne parallel zueinander in einer Ebene innerhalb eines umgebenden Claddings vereinigt. Jeder der Kerne kann als sogenannter Multimode-Kern ausgebildet sein. Die dort gezeigte Faser keine Sensorfaser und enthält auch keine FBG-Faserkerne. Gegenstand der Druckschrift ist eine zweckmäßige Ausbildung einer bestimmten Faserdichte in einem Faserband.

Die US 2011/0052129 A1 offenbart eine mehrkernige optische Faser. Gegenstand der Druckschrift ist das Reduzieren eines sogenannten Crosstalks zwischen im gemeinsamen Faserkörper vereinigten Kernen. Die Druckschrift offenbart ein Mehrkernfaser zur Lichtübertragung. Die offenbarten Faserkerne sind keine FBG-Faserkerne.

Die aus dem Stand der Technik bekannten Sensorfasern dieser Art weisen allerdings den Nachteil auf, dass derartige Fasern nicht ohne weiteres eine simultane Messung von Länge, Biegung, Temperatur und Torsion erlauben. Zur Erfassung möglichst umfangreicher Messdaten werden einerseits viele FBG-Faserkerne benötigt und es zeigt sich andererseits, dass die Auswertung der durch die Sensorfaser anfallenden Rohdaten zunehmend komplex wird.

Es besteht somit die Aufgabe, eine Sensorfaser der genannten Art mit einem möglichst einfachen Aufbau anzugeben, mit denen möglichst viele Messparameter simultan gemessen werden können und mit denen es insbesondere möglich ist, neben Temperatur-, Längen- und Biegeänderungen auch Torsionseffekte messbar zu machen.

Die Aufgabe wird mit einer Sensorfaser zur Temperatur-, Dehnungs- und/oder Torsionsdetektion in Form eines Mehrkern-Lichtwellenleiters mit einer Fiber-Bragg-Gitterstruktur mit den Merkmalen des Anspruchs 1 gelöst. Diese umfasst mindestens zwei mit der Fiber-Bragg-Gitterstruktur versehene lichtleitende FBG-Faserkerne und ein die FBG-Faserkerne umgebendes gemeinsames Cladding.

Erfindungsgemäß zeichnet sich die die Sensorfaser aus durch einen innerhalb des Claddings vorhandenen Referenzpunkt in Form von einem oder mehreren innerhalb der Sensorfaser angeordnete Unterscheidungs- und Orientierungsmitteln zum Erzeugen einer jeden einzelnen FBG-Faserkern eindeutig kennzeichnenden Markierung,
wobei die einzelnen in der Sensorfaser zusammengefassten FBG-Faserkerne unterscheidbar sind, sodass die jeweiligen Messsignale aus jedem einzelnen FBG-Faserkern von einer Messapparatur erfassbar und jeder einzelnen Faser eindeutig zuordenbar sind.

Erfindungsgemäß adressieren die Unterscheidungs- und Orientierungsmittel die einzelnen FBG-Faserkerne, sodass in einer der Sensorfaser nachgeschalteten Messapparatur jederzeit eine Information darüber vorliegt, welcher FBG-Faserkern innerhalb der Sensorfaser welches Signal liefert und welcher FBG-Faserkern somit in welcher Weise zum Messsignal beiträgt.

Erfindungsgemäß ist das ein oder mehrere innerhalb der Sensorfaser angeordnete Unterscheidungs- und Orientierungsmittel in Form von mindestens einer an ausgewählten Positionen innerhalb des Querschnitts der Sensorfaser im Cladding angeordneten, eindeutig detektierbaren Markierungszone ausgebildet, wobei die mindestens eine Markierungszone ein mechanische Spannungen induzierender Stab ist, wobei die mechanischen Spannungen eine eindeutig nachweisbare Änderung der Lichtleiteigenschaften bei einem in der Nähe gelegenen und dadurch markierten FBG-Faserkern bewirken.

Der der erfindungsgemäßen Sensorfaser zugrunde liegende Gedanke ist es somit, die einzelnen in der Sensorfaser zusammengefassten FBG-Faserkerne unterscheidbar zu gestalten, sodass sich die jeweiligen Messsignale aus jedem einzelnen FBG-Faserkern von einer Messapparatur in einer sehr einfachen Weise erfassen und vor allem jeder einzelnen Faser eindeutig zuordnen lassen. Durch diese Unterscheidungs- und Orientierungsmittel ist es insbesondere möglich, nicht nur Dehnungs-, Längen- und Biegungsmessungen auszuführen, sondern außerdem noch die Temperatur und vor allem eine an der Faser anliegende Torsion zu bestimmen. Letzteres ist dadurch möglich, weil die Unterscheidungs- und Orientierungsmittel die einzelnen FBG-Faserkerne adressieren, sodass in einer der Sensorfaser nachgeschalteten Messapparatur jederzeit eine Information darüber vorliegt, welcher FBG-Faserkern innerhalb der Sensorfaser welches Signal liefert und welcher FBG-Faserkern somit in welcher Weise zum Messsignal beiträgt.

Bei einer ersten nicht erfindungsgemäßen Ausführungsform ist das Unterscheidungs- und Orientierungsmittel eine nicht zylindersymmetrische Anordnung der einzelnen FBG-Faserkerne innerhalb des Claddings, wobei die FBG-Faserkerne in einer die eindeutige Markierung sichernden Anzahl vorgesehen sind.

Die einzelnen FBG-Faserkerne sind hierbei über den Querschnitt der Sensorfaser so verteilt, dass deren asymmetrische Anordnung eine eindeutige Unterscheidung der FBG-Faserkerne mit sich bringt.

Bei einer weiteren Ausführungsform ist das Unterscheidungs- und Orientierungsmittel in Form von an ausgewählten Positionen innerhalb des Querschnitts der Sensorfaser im Cladding angeordneten, eindeutig detektierbaren Markierungszonen ausgebildet. In einem derartigen Fall bietet die Sensorfaser der nachgeschalteten Messapparatur mindestens einen Referenzpunkt bzw. ein Referenzsignal, dass auf die Anordnung der FBG-Faserkerne und damit auf deren Unterscheidbarkeit verweist.

Die Markierungszonen können auf verschiedene Weise ausgebildet sein.

Bei einer ersten nicht erfindungsgemäßen Ausführungsform ist die Markierungszone eine in dem Cladding eingebettete Kapillare. Diese zeichnet sich durch ihre "Loch"-Struktur in einer optisch leicht zu detektierenden Weise aus und setzt somit einen Referenzpunkt innerhalb des Querschnitts der Sensorfaser, über den die einzelnen FBG-Faserkerne einzeln unterscheidbar sind.

Bei einer nicht erfindungsgemäßen Ausführungsform ist die Kapillare mit einem Analyten und/oder einem Marker gefüllt. Dadurch lassen sich an der Kapillare weitere Messsignale ableiten und/oder die Erfassbarkeit des durch die Kapillare gesetzten Referenzpunktes deutlich steigern.

Erfindungsgemäß ist die Markierungszone als ein mechanische Spannungen induzierender Stab ausgebildet, wobei die mechanischen Spannungen eine eindeutig nachweisbare Änderung der Lichtleiteigenschaften bei einem in der Nähe gelegenen und dadurch markierten FBG-Faserkern bewirken.

Die Unterscheidung der einzelnen FBG-Faserkerne ist bei dieser Ausführungsform somit dadurch bewirkt, dass mindestens einer der FBG-Faserkerne sich optisch deutlich von den übrigen FBG-Faserkernen unterscheidet und somit als Referenz verwendbar ist, von dem aus die einzelnen anderen FBG-Faserkerne durch die Messapparatur adressierbar sind.

Bei einer weiteren nicht erfindungsgemäßen Ausführungsform ist die Markierungszone als eine eine gegebene Anordnungssymmetrie der FBG-Faserkerne störende und nicht zu Lichtausbreitung verwendbare Fehlstelle in Form eines aus dem Material des Claddings bestehenden Stabes ausgebildet.

Die Unterscheidung der einzelnen FBG-Faserkerne wird hier dadurch bewirkt, indem die nachgeschaltete Messapparatur auf eine bestimmte Anordnungssymmetrie der FBG-Faserkerne innerhalb der Sensorfaser eingerichtet ist, aber infolge des aus dem Cladding bestehenden Stabes genau diese Anordnungssymmetrie als gestört detektiert. Diese Störstelle bildet dann einen Referenzpunkt, von dem aus die einzelnen FBG-Faserkerne adressierbar und somit unterscheidbar sind.

Bei einer weiteren nicht erfindungsgemäßen Ausführungsform ist das Unterscheidungs- und Orientierungsmittel durch ein am jeweiligen FBG-Faserkern ausgebildetes unsymmetrisch abgetragenes Material ausgebildet. Der FBG-Faserkern ist dadurch hinsichtlich seiner optischen Eigenschaften modifiziert und bildet somit einen eindeutig detektierbaren Referenzpunkt zur Adressierung der übrigen FBG-Faserkerne in der Sensorfaser.

Ergänzend kann jeder einzelner FBG-Faserkern zusätzlich von einer brechzahlabgesenkten eine zwischen den einzelnen FBG-Faserkernen erfolgende Lichtwellenleitung verhindernden Schicht umgeben sein. Dies unterstützt die eindeutige Zuordnung der Messsignale innerhalb der einzelnen FBG-Faserkerne und verbessert die Qualität des jeweiligen Messsignals.

Die erfindungsgemäße Sensorfaser soll nachfolgend anhand von Ausführungsbeispielen näher erläutert werden. Zur Verdeutlichung dienen die Figuren 1 bis 6. Es werden für gleiche bzw. gleichwirkende Teile dieselben Bezugszeichen verwendet.

Es zeigt:
- Fig. 1: einen Querschnitt eines ersten nicht erfindungsgemäßen Ausführungsbeispiels der Sensorfaser,
- Fig. 2: einen Querschnitt eines nicht erfindungsgemäßen Ausführungsbeispiels der Sensorfaser mit innerhalb des Claddings angeordneten Markierungszonen,
- Fig. 3: einen Querschnitt eines nicht erfindungsgemäßen Ausführungsbeispiels der Sensorfaser mit Markierungszonen in Form einer Kapillare mit und ohne Marker und/oder Analyten,
- Fig. 4: einen Querschnitt eines erfindungsgemäßen Ausführungsbeispiels der Sensorfaser mit einem Stab zum Induzieren mechanischer Spannungen,
- Fig. 5: einen Querschnitt eines nicht erfindungsgemäßen Ausführungsbeispiels der Sensorfaser mit einer symmetriestörenden Fehlstelle,
- Fig. 6: einen Querschnitt eines nicht erfindungsgemäßen Ausführungsbeispiels der Sensorfaser mit einem modifizierten FBG-Faserkern,
- Fig. 7: einen Querschnitt eines nicht erfindungsgemäßen Ausführungsbeispiels der Sensorfaser mit einer in der Außenkontur der Faser angeordneten Inhomogenität.

Sämtliche nachfolgend beschriebenen Ausführungsformen mit mehreren FBG-Faserkernen werden durch das Zusammenführen von dotierten und/oder undotierten Glasstäben erzeugt. Diese sind entweder Singlemode- oder Multimodepreformen. Weiterhin können auch dotierte/undotierte Glasstäbe eingefügt werden, die als Platzhalter oder zum Induzieren mechanischer Spannungen dienen. Diese Einzelkerne werden in einem Rohr derart angeordnet, dass eine Unterscheidung der einzelnen Kerne auch nach dem Verschmelzen und dem Ziehen der Faser möglich ist. Nachfolgend werden einige beispielhafte Ausführungsformen näher beschrieben.

Die Größe des Querschnitts der Markierungszonen ist von nicht ausschlaggebender Bedeutung. Sie sollten mindestens so groß sein, um zuverlässig optisch detektiert zu werden. Dabei genügt es insbesondere, dass die Markierungszone hinreichend deutlich als "Fehlstelle" oder "Inhomogenität" erfassbar ist.

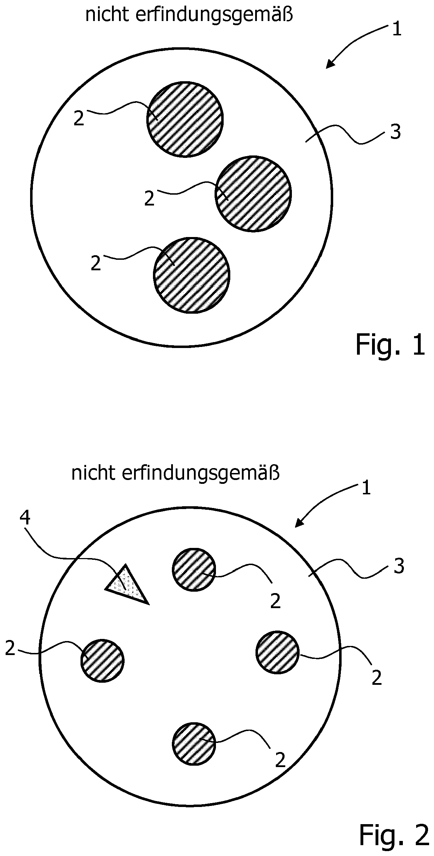

Fig. 1 zeigt einen Querschnitt eines ersten nicht erfindungsgemäßen Ausführungsbeispiels der Sensorfaser 1. Bei dem hier vorliegenden Beispiel besteht die Sensorfaser aus drei einzelnen FBG-Faserkernen 2, die jeweils ein Faser-Bragg-Gitter (FBG) aufweisen. Die drei FBG-Faserkerne sind von einem Cladding 3 umgeben, wobei die dadurch gebildete Sensorfaser im hier vorliegenden Beispiel eine kreisförmige Querschnittsform aufweist. Andere Querschnittsformen der Sensorfaser, insbesondere elliptische Formen, sind ebenfalls möglich.

Bei der in Fig. 1 gezeigten Ausführungsform sind drei FBG-Faserkerne im Cladding angeordnet, die untereinander keine zylindersymmetrische Verteilung einnehmen. Das Unterscheidungs- und Orientierungsmittel für die gesamte Sensorfaser und damit die Kennzeichnung jedes einzelnen Sensorkernes wird durch die asymmetrische Verteilung der Sensorkerne gesichert. Dabei bildet beispielsweise der in der Verteilung in der 12-Uhr-Richtung liegende Faserkern einen ersten, der in 3-Uhr-Richtung befindliche Faserkern den zweiten und der bei 6 Uhr liegende Faserkern den dritten Kern, wobei festgelegt ist, dass in der 9 Uhr Richtung die Asymmetrie der Sensorfaser liegt. Diese Asymmetrie kann leicht detektiert werden. Die Orientierung der Sensorfaser in einem äußeren Bezugssystem, insbesondere deren Verdrehwinkel, kann dabei an sich beliebig sein. Sobald die Asymmetrie detektiert worden ist, sind die einzelnen FBG-Faserkerne adressierbar, sodass deren Position zum äußeren Bezugssystem problemlos durch entsprechende Transformationen innerhalb der Messapparatur nachkorrigiert werden kann. Die entsprechende Zuordnung kann in der Messvorrichtung vorgenommen werden. Allerdings ist hierbei auf eine richtige Durchstrahlungsrichtung der Sensorfaser zu achten.

Die in Fig. 1 gezeigte unsymmetrische Anordnung der FBG-Faserkerne kann in einer sehr einfachen Weise bei der Fertigung der Preform der Sensorfaser festgelegt werden. Dabei werden die Preform-FBG-Kerne entsprechend angeordnet und in der üblichen Weise mit dem Cladding umgeben. Die Anordnung der FBG-Kerne wird beim anschließenden Ziehvorgang beibehalten und markiert in der fertigen Sensorfaser die dort vorliegende Asymmetrie.

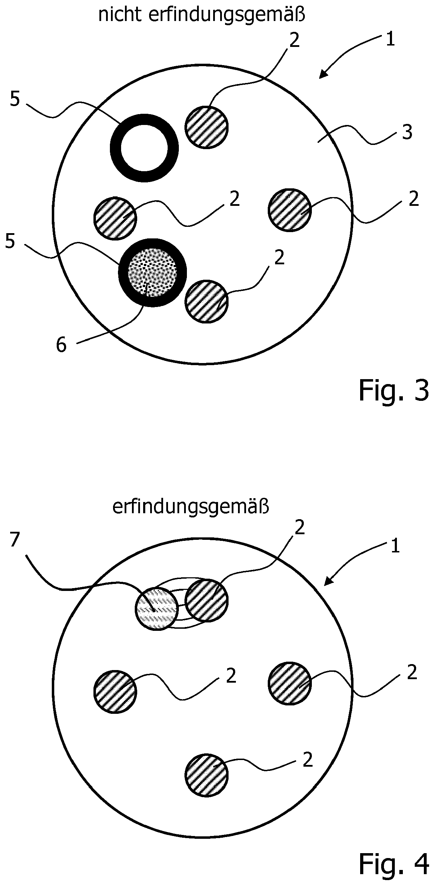

Fig. 2 zeigt eine nicht erfindungsgemäße Ausführungsform mit vier FBG-Faserkernen 2 in einer zylindersymmetrischen Anordnung. Bei dem hier vorliegenden Beispiel ist innerhalb des Claddings 3 eine Markierungszone 4 vorgesehen, die zwischen zwei FBG-Faserkernen 2 eingeschlossen ist und somit eine Markierungsstelle im Cladding bezeichnet. Die Markierungszonen sind Gebiete innerhalb des Claddings, die sich in ihren Eigenschaften vom umgebenden Cladding unterscheiden. Bei der Ausführungsform in Fig. 4 handelt es sich um eine Markierungszone mit dreieckigem Querschnitt. Sie ist im Vergleich zu den FBG-Faserkernen relativ klein ausgebildet, aber hinreichend groß, um zuverlässig detektiert zu werden.

Die Markierungszonen können insbesondere lichtleitend ausgeführt sein, ohne dass diese jedoch als eigentliche lichtleitende Kerne oder Sensorkerne Verwendung finden. Ihre Funktion besteht im Wesentlichen nur darin, ein Orientierungssignal und damit einen Referenzpunkt für die gesamte Sensorfaser zu liefern und zu definieren.

Eine Möglichkeit, eine oder mehrere Markierungszonen im Cladding 3 anzubringen, ist in Fig. 3 gezeigt. In dem hier vorliegenden nicht erfindungsgemäßen Fall sind zwei Kapillaren 5 in das Cladding eingebettet, wobei eine der Kapillaren mit einem Analyten und/oder einem Marker 6 gefüllt ist. Der Marker kann beispielsweise eine fluoreszierende Substanz sein, deren Fluoreszenzlicht von einer nachgeschalteten Messapparatur registriert wird. Im Querschnitt zeigen sich die Kapillaren als "Löcher", die entweder gefüllt oder ungefüllt sind. Eine wie in diesem Beispiel ausgebildete Sensorfaser sichert einerseits eine Unterscheidbarkeit der einzelnen FBG-Faserkerne 2, etwa dadurch, dass der zwischen den Kapillaren angeordnete FBG-Faserkern als erster Kern und die darauf im Uhrzeigersinn folgenden FBG-Faserkerne als zweiter, dritter und vierter FBG-Faserkern bezeichnet und auch so detektierbar sind. Darüber hinaus sind auch beide Kapillaren unterscheidbar gestaltet, sodass auch die Durchstrahlungsrichtung der Sensorfaser eindeutig feststellbar ist, wobei die eindeutige Adressierung der einzelnen FBG-Faserkerne jederzeit erhalten bleibt. Im Einzelnen wird die Orientierung der Sensorfaser und ihrer einzelnen FBG-Faserkerne so vorgenommen, dass eine nachgeschaltete Messapparatur die von den Kapillaren 5 einlaufenden Lichtsignale entsprechend registriert und in einem internen Kalibrierungsprozess dann die Adressierung der einzelnen FBG-Faserkerne vornimmt.

Eine erfindungsgemäße Möglichkeit zur Markierung und Adressierung der FBG-Faserkerne zeigt Fig. 4. Bei dem hier vorliegenden Beispiel ist innerhalb des Claddings 3 ein Stab 7 vorgesehen, der in der Nähe einer der FBG-Faserkerne 2 angeordnet ist und in diesem FBG-Faserkern mechanische Spannungen induziert. Dadurch ändert sich das optische Verhalten des entsprechenden FBG-Faserkerns. Dieser bildet somit einen von einer Messapparatur eindeutig detektierbaren Referenzpunkt, von dem aus die übrigen FBG-Faserkerne unterscheidbar sind und adressiert werden können.

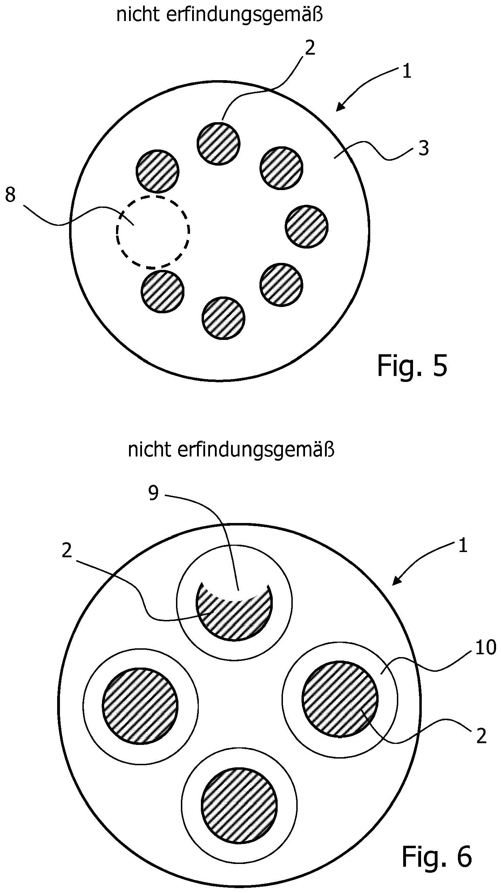

Fig. 5 zeigt eine weitere nicht erfindungsgemäße Möglichkeit zur Markierung und Adressierung der FBG-Faserkerne. In dem hier vorliegenden Beispiel ist eine zylindersymmetrische Anordnung aus acht FBG-Faserkernen 3 innerhalb des gemeinsamen Claddings 3 vorgesehen. Dabei ist allerdings die achtzählige Symmetrie dadurch gestört, indem einer der FBG-Faserkerne durch einen Stab 8 ersetzt worden ist. Dieser Stab 8 weist insbesondere die Brechzahl des Claddings auf und kann auch aus dem gleichen Material wie das Cladding bestehen. Natürlich kann sich der Stab auch hinsichtlich des Materials und der Brechzahl vom Cladding unterscheiden. In jedem Fall bricht der Stab die Symmetrie der Anordnung der FBG-Faserkerne und setzt somit einen markierenden Referenzpunkt.

Fig. 6 zeigt eine weitere beispielhafte nicht erfindungsgemäße Ausführungsform der Sensorfaser 1 mit vier FBG-Faserkernen 2 innerhalb des Claddings 3. Bei der hier vorliegenden Ausführungsform ist zum einen einer der FBG-Faserkerne mit einer Modifizierung 9 versehen, die somit einen Referenzpunkt für die Anordnung der FBG-Faserkerne setzt. Zum anderen sind sämtliche FBG-Faserkerne mit eine brechzahlabgesenkten Schicht 10 umgeben.

Die Modifizierung 9 kann insbesondere dadurch erreicht werden, indem der betreffende FBG-Faserkern durch ein unsymmetrisches Abtragen von Material modifiziert wird.

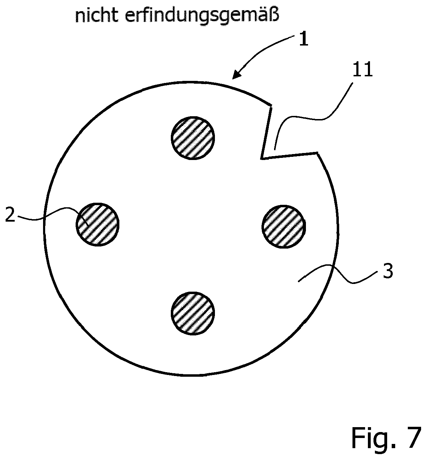

Fig. 7 zeigt eine nicht erfindungsgemäße Ausführungsform der Sensorfaser 1 mit vier FBG-Faserkernen 2 innerhalb des Claddings 3. Die Markierungszone ist in diesem Ausführungsbeispiel als eine Inhomogenität 11 innerhalb der Außenkontur der Sensorfaser ausgebildet. Die Inhomogenität ist im hier vorliegenden Fall eine Vertiefung in Form einer Kerbe. Die Kerbe innerhalb der Sensorfaser kann dadurch erzeugt werden, indem in die zur Herstellung der Sensorfaser bestimmte Preform an einer definierten Stelle eine hinreichend tiefe und breite Ausgangskerbe über die gesamte Länge der Preform eingefräst oder durch entsprechend andere Bearbeitungsverfahren eingebracht wird. Beim nachfolgenden Ziehvorgang verrundet und verflacht die Ausgangskerbe etwas, bleibt jedoch hinreichend deutlich erhalten und ist als detektierbare Markierung verwendbar.

Während der Herstellung von Preform und Faser werden die Einzelkerne mit dem umgebenden Rohr verschmolzen. In manchen Fällen können die Faser-Bragg-Gitter wie auch die an den einzelnen FBG-Faserkernen auszuführenden Modifizierungen auch während des Faserziehprozesses direkt durch das Cladding in die Sensorfaser eingeschrieben werden.

Die Sensorfaser wurde anhand von Ausführungsbeispielen näher erläutert.

Die Erfindung wird durch die beigefügten Ansprüche definiert.

### Bezugszeichenliste

- 1: Sensorfaser
- 2: FBG-Faserkern
- 3: Cladding
- 4: Markierungszone
- 5: Kapillare
- 6: Marker/Analyt
- 7: spannungsinduzierender Stab
- 8: Fehlstellenstab
- 9: Faserkernmodifizierung
- 10: brechzahlabgesenkte Schicht
- 11: Inhomogenität in Außenkontur

## Patentansprüche

1. Sensorfaser (1) zur Temperatur-, Dehnungs- und Torsionsdetektion in Form eines Mehrkern-Lichtwellenleiters mit einer Fiber-Bragg-Gitterstruktur, umfassend mindestens zwei mit der Fiber-Bragg-Gitterstruktur versehene lichtleitende FBG-Faserkerne (2) und ein die FBG-Faserkerne umgebendes gemeinsames Cladding (3),
**gekennzeichnet durch**
einen innerhalb des Claddings vorhandenen Referenzpunkt in Form von einem oder mehreren innerhalb der Sensorfaser angeordnete Unterscheidungs- und Orientierungsmitteln zum Erzeugen einer jeden einzelnen FBG-Faserkern eindeutig kennzeichnenden Markierung,
wobei die einzelnen in der Sensorfaser zusammengefassten FBG-Faserkerne unterscheidbar sind, sodass die jeweiligen Messsignale aus jedem einzelnen FBG-Faserkern von einer Messapparatur erfassbar und jeder einzelnen Faser eindeutig zuordenbar sind,
wobei die Unterscheidungs- und Orientierungsmittel die einzelnen FBG-Faserkerne adressieren, sodass in einer der Sensorfaser nachgeschalteten Messapparatur jederzeit eine Information darüber vorliegt, welcher FBG-Faserkern innerhalb der Sensorfaser welches Signal liefert und welcher FBG-Faserkern somit in welcher Weise zum Messsignal beiträgt,
wobei
das ein oder mehrere innerhalb der Sensorfaser angeordnete Unterscheidungs- und Orientierungsmittel in Form von mindestens einer an ausgewählten Positionen innerhalb des Querschnitts der Sensorfaser (1) im Cladding (3) angeordneten, eindeutig detektierbaren Markierungszone (4) ausgebildet ist,
wobei
die mindestens eine Markierungszone ein mechanische Spannungen induzierender Stab (7) ist, wobei die mechanischen Spannungen eine eindeutig nachweisbare Änderung der Lichtleiteigenschaften bei einem in der Nähe gelegenen und dadurch markierten FBG-Faserkern bewirken.

2. Sensorfaser nach Anspruch 1,
**dadurch gekennzeichnet, dass**
jeder einzelne FBG-Faserkern (2) von einer brechzahlabgesenkten, eine zwischen den einzelnen FBG-Faserkernen erfolgende Lichtwellenleitung verhindernde Schicht (10) umgeben ist.

## Claims

1. Sensor fiber (1) for temperature, expansion and torsion detection in the form of a multi-core optical fiber with a fiber Bragg grating structure, comprising at least two light-conducting FBG fiber cores (2) provided with the fiber Bragg grating structure and a common cladding (3) surrounding the FBG fiber cores, **characterized by**
a reference point present within the cladding in the form of one or more distinguishing and orientation means arranged within the sensor fiber for producing a marking which uniquely identifies each individual FBG fiber core, wherein the individual FBG fiber cores combined in the sensor fiber are distinguishable, so that the respective measurement signals from each individual FBG fiber core can be detected by a measuring apparatus and can be uniquely assigned to each individual fiber,
wherein the distinguishing and orientation means address the individual FBG fiber cores, so that a measuring apparatus downstream of the sensor fiber always has information about which FBG fiber core within the sensor fiber supplies which signal and which FBG fiber core thus contributes to the measuring signal in which way,
wherein
the one or more distinguishing and orientation means arranged within the sensor fiber is designed in the form of at least one clearly detectable marking zone (4) arranged at selected positions within the cross-section of the sensor fiber (1) in the cladding (3),
wherein
the at least one marking zone is a rod (7) inducing mechanical tensions,
wherein the mechanical tensions cause a clearly detectable change in the light guiding properties of an FBG fiber core located in the vicinity and marked thereby.

2. Sensor fiber according to claim 1,
**characterized in that**
each individual FBG fiber core (2) is surrounded by a refractive index-reduced layer (10) which prevents light wave conduction occurring between the individual FBG fiber cores.

## Revendications

1. Fibre de détection (1) destinée à la détection de la température, de la dilatation et de la torsion, conçue sous la forme d'un guide d'ondes lumineuses à noyaux multiples ayant une structure de réseau de fibres de Bragg, comprenant au moins deux noyaux de fibre FBG (2) guidant la lumière et pourvus de la structure de réseau de fibres de Bragg, et une gaine commune (3) entourant les noyaux de fibre FBG,
**caractérisée par**
un point de référence situé à l'intérieur de la gaine et se présentant sous la forme d'un ou plusieurs moyens de distinction et d'orientation disposés à l'intérieur de la fibre de détection pour produire un marquage caractérisant de manière univoque chaque noyau de fibre FBG individuel,
sachant que
les noyaux de fibre FBG individuels réunis dans la fibre de détection peuvent être distingués, de sorte que les signaux de mesure respectifs provenant de chaque noyau de fibre FBG individuel peuvent être saisis par un appareil de mesure et attribués de manière univoque à chaque fibre individuelle,
les moyens de distinction et d'orientation adressent les noyaux de fibre FBG individuels, de sorte que dans un appareil de mesure placé en aval de la fibre de détection, on dispose à tout moment d'une information indiquant quel noyau de fibre FBG à l'intérieur de la fibre de détection fournit quel signal et quel noyau de fibre FBG contribue donc au signal de mesure et de quelle manière,
un ou plusieurs moyens de distinction et d'orientation disposés à l'intérieur de la fibre de détection sont réalisés sous la forme d'au moins une zone de marquage (4) détectable de manière univoque, disposée à des positions sélectionnées à l'intérieur de la section transversale de la fibre de détection (1) dans la gaine (3),
ladite au moins une zone de marquage est une tige (7) induisant des contraintes mécaniques, les contraintes mécaniques provoquant une modification, détectable de manière univoque, des propriétés de conduction de la lumière dans le cas d'un noyau de fibre FBG situé à proximité et ainsi marqué.

2. Fibre de détection selon la revendication 1,
**caractérisée en ce que**
chaque noyau de fibre FBG (2) individuel est entouré d'une couche (10) à indice de réfraction abaissé, empêchant une conduction d'ondes lumineuses entre les noyaux de fibre FBG individuels.
